# DEMANDE DE BREVET EUROPEEN

(11) **EP 3 231 624 A2**
(43) Date de publication de la demande: **18.10.2017**
(21) Numéro de dépôt: 17165581.4
(22) Date de dépôt: 07.04.2017
(51) Int. Cl.: B41M 5/00, B44C 5/04, B41M 1/38, B41M 7/00, B32B 21/14, E04F 15/02

(54) **PROCÉDÉ DE RÉALISATION D'UNE LAME DE PARQUET IMPRIMÉE**

(30) Priorité: 14.04.2016 FR 1653310
(71) Demandeur: COMPAGNIE FRANÇAISE DU PARQUET, 58440 Myennes (FR)
(72) Inventeur: CARPENTIER, Emmanuel, 58440 Myennes (FR)
(74) Mandataire: Novagraaf Technologies

(57) **Abrégé**

Le procédé de réalisation de lame de parquet possédant un motif imprimé sur une face externe comprend des étapes de
A- Homogénéisation d'un état de surface de la face externe de la lame ;
B- Dépôt d'un apprêt sur la face ainsi homogénéisée ;
C- Impression du motif sur la face ainsi apprêtée ;
D- Dépôt d'une couche de protection sur la face ainsi imprimée ; et,
E- Dépôt d'une couche de finition sur la couche de protection.

## Description

L'invention relève du domaine de l'impression de motifs divers sur des lames de parquets.

L'impression sur parquet est une technique utilisée afin d'offrir une grande diversité dans l'offre de parquet en proposant des motifs et des couleurs qui ne seraient pas réalisables autrement.

Le bois permettant de réaliser des lames de parquet absorbe naturellement les liquides à sa surface. Se faisant, l'encre d'impression a tendance à se disperser de façon aléatoire sous la surface par capillarité, ce qui rend l'impression floue et donc de qualité médiocre. Cette qualité, en plus d'être intrinsèquement médiocre, dépend de la nature du bois et notamment de sa densité, de son essence et de l'orientation de ses fibres. La qualité d'impression varie donc d'une lame de parquet à une autre.

De plus, en ce qui concerne la mise en teinte du bois, il n'est pas recommandé de teinter le bois après impression car la teinte recouvre alors l'impression et la masque. Si cette mise en teinte est réalisée avant l'impression, deux situations se présentent alors :
- Si aucun égrainage n'est réalisé avant l'impression, la qualité obtenue est médiocre. En effet, les teintes se situent en phase aqueuse ce qui, étant donné que la plupart des essences sont hydrophiles, pousse les fibres situées à la surface du bois à se relever, perturbant ainsi le processus d'impression.
- Si un égrainage est réalisé avant l'impression, le motif obtenu est de bonne qualité mais la teinte de fond ne possède pas une bonne régularité.

Pour répondre à ces problématiques, il est connu de l'état de l'art de placer sur le bois une feuille de papier, ou un support équivalent, sur laquelle l'impression est réalisée. Cette technique permet d'obtenir des résultats de bonne qualité, cependant, l'application d'un tel matériau support sur du bois est coûteuse.

Il est connu de l'état de l'art des procédés d'impression sur parquet cherchant à limiter ces coûts tout en maintenant une qualité d'impression satisfaisante.

Le document WO 2010/055429 présente un procédé d'impression sur parquet dans lequel l'impression est réalisée sur une couche de matériau préalablement appliquée sous forme liquide sur une surface de la lame de parquet. Une couche de finition est ensuite appliquée sur la surface imprimée.

Cependant, cette méthode ne permet pas d'obtenir une impression de grande qualité sur n'importe quel support de type bois.

Dans l'optique d'obtenir des lames de parquet sur lesquelles des impressions de grandes qualités peuvent être réalisées sur tout support de type bois, il est prévu, selon l'invention, un procédé de réalisation de lames de parquet possédant un motif imprimé sur une face externe comprenant des étapes de :
A- Homogénéisation d'un état de surface d'une face externe de la lame ;
B- Dépôt d'un apprêt sur la face ainsi homogénéisée ;
C- Impression du motif sur la face ainsi apprêtée ;
D- Dépôt d'une couche de protection sur la face ainsi imprimée ;
E- Dépôt d'une couche de finition sur la couche de protection.

Ainsi, suite à la réalisation de l'étape B, la surface d'impression, que forme la face ainsi apprêtée, est indépendante de l'essence, de l'orientation des fibres ou de la couleur de fond appliquée. Cette surface d'impression ainsi obtenue permet de réaliser des impressions de grande qualité, c'est-à-dire nettes et sans bavure, le tout sans utilisation de matériau support additionnel comme une feuille de papier. Enfin, les étapes suivant l'impression permettent d'assurer une bonne résistance de l'ensemble à l'usure tout en obtenant un bon fini de surface.

Avantageusement mais facultativement, le procédé selon l'invention comporte au moins l'une des caractéristiques techniques suivantes :
- l'impression est une impression numérique ;
- l'apprêt comporte une première couche d'apprêt et une couche de garnissage ;
- l'apprêt comporte une deuxième couche d'apprêt placée entre la première couche d'apprêt et la couche de garnissage ;
- l'apprêt comporte une quatrième couche, placée entre la face externe homogénéisée de la lame et la première couche d'apprêt ;
- les couches d'apprêt sont composées d'une résine acrylique avec des particules incorporées ou d'un fond dur égrainable ;
- la couche de garnissage est composée d'une résine acrylique de garnissage ou d'un fond dur égrainable mono ou bi-composants ;
- la quatrième couche est composée au choix :
   ∘ d'une résine acrylique de garnissage ;
   ∘ d'une teinte ;
   ∘ d'un promoteur d'adhérence ;
   ∘ d'une phase polyuréthane mono ou bi-composant ;
- une ou deux couches de protection supplémentaires sont ajoutées sur la couche de protection appliquée à l'étape D ;
- les couches de protection sont composées au choix :
   ∘ d'une résine acrylique de garnissage ;
   ∘ d'une couche de vernis acrylique avec des particules incorporées ;
   ∘ d'un promoteur d'adhérence ;
   ∘ d'une phase polyuréthane mono ou bi-composants ;
- la couche de finition est composée de deux couches de résine de finition.

D'autres caractéristiques et avantages de l'invention apparaîtront lors de la description ci-après d'un mode de réalisation préféré permettant la réalisation de lames de parquet possédant un motif imprimé sur une face externe.

Nous allons maintenant décrire plus en détail un procédé de réalisation de lame de parquet possédant un motif imprimé selon l'invention.

Une première étape du procédé selon l'invention permet d'homogénéiser l'état d'une surface d'une lame de parquet sur laquelle une impression va être réalisée. Cette homogénéisation s'effectue à l'aide d'une couche d'enduit. Cette couche d'enduit est appliquée par des moyens d'application connus en soi, comme un rouleau ou manuellement, sur la face de la lame de parquet à homogénéiser. La couche d'enduit ainsi appliquée est ensuite séchée, par ultraviolet, infrarouge ou à l'air suivant l'enduit utilisé, avant de subir un égrainage, par bande abrasive ou manuel. Cet égrainage permet, en plus de rendre la face propre, d'éliminer l'excédent d'enduit.

En variante de réalisation, le procédé selon l'invention peut comprendre des pré-étapes de modification des dimensions de la lames de parquet. Dans ce cas, un calibrage en épaisseur peut être réalisé par ponçage sous machine ou manuellement avant l'homogénéisation de l'état de surface de la face externe de la lame. Un usinage en largeur et en longueur du profil des lames, notamment pour permettre l'assemblage des lames, peut aussi être réalisé.

Une fois l'étape d'homogénéisation précédemment décrite réalisée, un apprêt est appliqué sur la face ainsi homogénéisée, dans une deuxième étape du procédé selon l'invention. L'application de cet apprêt peut comporter une application d'une première couche d'apprêt puis d'une couche de garnissage, appliquée après l'application de la première couche d'apprêt. En variante, elle peut aussi comporter l'application d'une deuxième couche d'apprêt, réalisée entre la première couche d'apprêt et la couche de garnissage, et/ou d'une quatrième couche, réalisée entre la face externe homogénéisée de la lame de parquet traitée et la première couche d'apprêt.

Les couches d'apprêt peuvent être composées d'une résine acrylique avec des particules incorporées ou d'un fond dur égrainable mono ou bi-composants, qui peut être à base d'eau ou de solvant. Ladite résine acrylique avec particules incorporées, comme des nanoparticules ou bien encore des particules d'oxyde d'alumine, a pour but d'augmenter la résistance à l'abrasion et la dureté de surface, ce qui augmente la résistance à la rayure et la tenue de l'impression qui va être réalisée.

La couche de garnissage peut être composée d'une résine acrylique de garnissage ou d'un fond dur égrainable mono ou bi-composant à base d'eau ou de solvant.

Enfin, La quatrième couche peut être composée :
- d'une résine acrylique de garnissage, cette résine ne pouvant être utilisée que si le parquet est chanfreiné et non teinté ;
- d'une teinte mélangée dans une base à teinter en phase aqueuse ou solvantée ;
- d'un promoteur d'adhérence ; ou
- d'une phase polyuréthane mono ou bi-composant à base d'eau ou de solvant.

A l'issue de ces étapes, une surface d'impression indépendante de l'essence, du le fil de bois ou de la couleur de fond appliquée est obtenue.

Sur cette surface d'impression est ensuite réalisée, dans une troisième étape du procédé selon l'invention, une impression, numérique ou non, d'un motif. Ce motif peut être du texte, une ou plusieurs formes simples, un logo, une image, etc... De manière générale, il est entendu, ici, par motif, un élément pouvant faire l'objet d'une impression.

L'étape d'impression correspond à l'application d'un film d'impression composé d'une ou plusieurs encres d'impression sur la surface d'impression précédemment obtenue. Il est à noter que, de manière optimale, la densité d'encre de cette impression ne doit pas dépasser un seuil critique au-delà duquel la cohésion du film d'impression devient insuffisante pour supporter les efforts subis en surface par la lame de parquet après sa pose.

Une fois l'impression réalisée, dans une quatrième étape du procédé selon l'invention, au moins une couche de protection est appliquée sur le film d'impression précédemment réalisé. En variante de réalisation du procédé selon l'invention, une ou deux couches de protection supplémentaires peuvent être ajoutées sur la couche de protection précédente. Ces couches de protections sont composées de résine renforcée afin de protéger le film d'impression lors d'un égrainage subséquent.

Ces couches de protection peuvent être composées :
- d'une résine acrylique de garnissage, cette résine n'étant utilisable qu'en tant que première couche de protection ;
- d'une couche de vernis acrylique avec des particules incorporées, ce vernis n'étant pas utilisable pour la première couche de protection ;
- d'un promoteur d'adhérence ; ou,
- d'une phase polyuréthane mono ou bi-composants à base d'eau ou de solvant.

Il est à noter que la couche de vernis avec des particules incorporées précédemment citée permet d'augmenter la dureté de surface, et donc la résistance à la rayure, et de fixer l'impression. Ces particules peuvent être des nanoparticules ou encore des particules d'oxyde d'alumine.

De manière générale, dans le procédé selon l'invention, il est à noter qu'une opération de séchage est effectuée après l'ajout de chaque couche de produit (apprêt, garnissage, protection). Le séchage est réalisé de manière similaire au séchage décrit lors de la première étape d'homogénéisation du procédé selon l'invention.

De même, une opération d'égrainage survient après l'étape d'application de l'apprêt et après l'étape d'application de la couche de protection, cet égrainage étant réalisé manuellement ou par bande abrasive dans l'épaisseur de la dernière couche appliquée.

Enfin, une étape supplémentaire du procédé selon l'invention permet d'appliquer une couche de finition sur l'ensemble ainsi obtenu, cette couche pouvant être composée d'une ou deux couches de résine de finition. Ces couches de résines sont appliquées puis séchées de manière similaire aux couches précédemment évoquées. Après l'application de ces résines de finition, la surface obtenue présente un aspect brillant ou mat ou encore satiné selon ce qui est désiré.

Bien entendu, il est possible d'apporter à l'invention de nombreuses modifications sans pour autant sortir du cadre de celle-ci.

## Revendications

1. Procédé de réalisation de lame de parquet possédant un motif imprimé sur une face externe comprenant des étapes de :
A- Homogénéisation d'un état de surface de la face externe de la lame par le dépôt d'une couche d'enduit qui est ensuite séchée puis égrainée ;
B- Dépôt d'un apprêt sur la face ainsi homogénéisée, l'apprêt étant ensuite séché puis égrainé ;
C- Impression du motif sur la face ainsi apprêtée ;
D- Dépôt d'une couche de protection sur la face ainsi imprimée, la couche de protection étant ensuite séchée puis égrainée ; et,
E- Dépôt d'une couche de finition sur la couche de protection, la couche de finition étant ensuite séchée.

2. Procédé selon la revendication 1, **caractérisé en ce que** l'apprêt comporte une première couche d'apprêt et une couche de garnissage.

3. Procédé selon la revendication 2, **caractérisé en ce que** l'apprêt comporte une deuxième couche d'apprêt placée entre la première couche d'apprêt et la couche de garnissage.

4. Procédé selon les revendications 2 ou 3, **caractérisé en ce que** l'apprêt comporte une quatrième couche, placée entre la face externe homogénéisée de la lame et la première couche d'apprêt.

5. Procédé selon l'une quelconque des revendications 2 à 4, **caractérisé en ce que** les couches d'apprêt sont composées d'une résine acrylique avec des particules incorporées ou d'un fond dur égrainable mono ou bi-composant.

6. Procédé selon l'une quelconque des revendications 2 à 5, **caractérisé en ce que** la couche de garnissage est composée d'une résine acrylique ou d'un fond dur égrainable mono ou bi-composants.

7. Procédé selon la revendication 4, **caractérisée** en ce la quatrième couche est composée au choix :
- d'une résine acrylique de garnissage ;
- d'une teinte ;
- d'un promoteur d'adhérence ; ou
- d'une phase polyuréthane mono ou bi-composant.

8. Procédé selon l'une quelconque des revendications 1 à 7, **caractérisé en ce que** l'impression est une impression numérique.

9. Procédé selon l'une quelconque des revendications 1 à 8, **caractérisé en ce qu'**une ou deux couches de protection supplémentaires sont ajoutées sur la couche de protection appliquée à l'étape D.

10. Procédé selon la revendication 9, **caractérisé en ce que** les couches de protection sont composées au choix :
- d'une résine acrylique de garnissage ;
- d'une couche de vernis acrylique avec des particules incorporées ;
- d'un promoteur d'adhérence ; ou
- d'une phase polyuréthane mono ou bi-composants.

11. Procédé selon l'une quelconque des revendications 1 à 10, **caractérisé en ce que** la couche de finition est composée de deux couches de résine de finition.
